(19) Europäisches Patentamt
European Patent Office
Office européen des brevets

(11) **EP 2 373 090 B1**

(12) **EUROPEAN PATENT SPECIFICATION**

(45) Date of publication and mention
of the grant of the patent:
**09.11.2016  Bulletin 2016/45**

(51) Int Cl.:
***H04W 36/28*** *(2009.01)*   *H04W 36/08* *(2009.01)*

(21) Application number: **10290172.5**

(22) Date of filing: **01.04.2010**

(54) **Optimized carrier aggregation for handover**

Optimierte Trägeraggregation für Übergabe

Agrégation de porteuses optimisée pour le transfert

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.10.2011  Bulletin 2011/40**

(73) Proprietor: **ALCATEL LUCENT**
**92100 Boulogne-Billancourt (FR)**

(72) Inventor: **Aydin, Osman**
**70569 Stuttgart (DE)**

(74) Representative: **Wetzel, Emmanuelle et al**
**Alcatel-Lucent**
**Intellectual Property Business Group**
**70430 Stuttgart (DE)**

(56) References cited:
- **NEC: "Mobility and Carrier Aggregation Signaling" 3GPP DRAFT; R2-101561, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 15 February 2010 (2010-02-15), XP050421697 [retrieved on 2010-02-15]**
- **CATT: "Handover for Carrier Aggregation" 3GPP DRAFT; R2-093722, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050351955 [retrieved on 2009-06-23]**
- **LG ELECTRONICS INC: "Handover Execution Using Multiple Carriers" 3GPP DRAFT; R2-097059 HANDOVER_CA, no. Jeju; 20091109 PAN - R2-097059 Handover_CA, 14 November 2009 (2009-11-14) , XP050391407 [retrieved on 2009-11-03]**

# Description

## Field of the invention

The invention relates to a method of performing a handover of a user equipment from a source cell to a target cell, a user equipment, a method of performing a handover by a base station, a base station, as well as a computer program product.

## Background and related art

Currently, UMTS (universal mobile telecommunications systems) networks are worldwide being upgraded in order to provide data to user equipments (EUs) at high data rates. In order to ensure the competitiveness of UMTS for the next couple of years and beyond, concepts for UMTS long term evolution (LTE) have been investigated. The objective is a high data rate, low latency and packet optimized radio access technology.

A UMTS network constitutes the third generation (3G) of cellular wireless networks. Third generation partnership (3GPP) is working on establishing standards for multimedia services.

An LTE advanced terminal, i.e. a user equipment (UE) can be jointly scheduled on multiple component carriers at the same time using the so called carrier aggregation in LTE release 10 or on a single component carrier as in LTE release 8. Consequently, as for example specified in 3GPP TS 36.300 (third generation partnership project, technical specification group radio access network, evolved universal terrestrial radio access and evolved universal terrestrial radio access network; overall description; release 10) in carrier aggregation (CA) two or more component carriers (CCs) are aggregated in order to support wider transmission bandwidth up to 100 MHz. Such an extended 100 MHz LTE-advanced bandwidth consists for example of five component carriers (CC), each with a bandwidth of 20 MHz. The LTE-advanced spectrum may also be less than 100 MHz and may therefore consist of less than five component carriers. All CCs can be configured to be LTE release 8/9 compatible, at least when the aggregated numbers of CCs in the uplink (UL) and the downlink (DL) are the same. However, not all CCs may necessarily be release 8/9 compatible.

Herein, it is assumed that each base station (in 3GPP LTE: eNodeB) always has one active component carrier, denoted the 'primary component carrier' (PCC). The PCC is automatically selected by the eNodeB when it is first switched on and it is assumed to provide full cell coverage. Additionally, depending on the offered traffic in the cell and mutual interference coupling with surrounding cells, each cell dynamically may select additional component carriers for transmission/reception, which is referred to as selection of secondary component carriers (SCCs). Component carriers not selected are assumed to be completely muted (uplink/downlink) and not used by the cell.

Prior art examples are disclosed in 3GPP TSG-RAN WG2 #69, San Francisco, US, 22-26 February, 2010, NEC" Mobility and Carrier Aggregation Signaling "and in 3GPP TSG RAN WG2 Meeting #66bis, Los Angeles, USA, 29 June - 03 July, 2009, CATT" Handover for Carrier Aggregation".

## Summary of the invention

The invention provides for a method of performing a handover of a user equipment from a source cell to a target cell in independent claim 1, a user equipment adapted for performing a handover from a source cell to a target cell in independent claim 6, a method of performing a handover of a user equipment from a source cell to a target cell in independent claim 7, complementarily to claim 1, a base station adapted for performing a handover of a user equipment from a source cell to a target cell in independent claim 9, and a computer product in independent claim 10. Embodiments are described in the dependent claims.

The present invention provides a method of performing a handover of a user equipment from a source cell to the target cell, wherein the user equipment is adapted for receiving and/or transmitting data simultaneously on two or more aggregated component carriers forming at least one component carrier, wherein the method comprises receiving an RRC (radio resource control) connection reconfiguration message from the source cell on the random access channel (RACH) of the source cell, said message comprising linking information, said linking information indicating one of the aggregated component carriers for the uplink of the target cell and one of the aggregated component carriers for the downlink of the target cell.

Embodiments of the invention have the advantage, that UE specific linking can be simply achieved by sending the RRC connection reconfiguration message (HO command). Thus, no additional signaling from the target cell to the UE is required for a reconfiguration, addition and removal of CCs. Consequently, the handover is made more seamless since additional signaling introducing short connection gaps is avoided. Thus, a sustainable user experience can be guaranteed, i.e. by keeping the throughput performance minimum as good as in source cell.

In accordance with an embodiment of the invention, the RRC connection reconfiguration message further comprises a dedicated RACH preamble. Such a dedicated RACH preamble is preferably valid for a specific component carrier (CC) linking of the target cell and thus provides explicit linking in the HO command. The dedicated preamble may thus be used in uplink PCC for access at the target cell, wherein due to the CC linking given in the HO command the user equipment automatically knows at which downlink CC a respective RACH response can be expected.

Further, non-contention RACH access is guaranteed for the handover case with carrier aggregation. In an alternative embodiment, the RACH preamble can also be used for RACH load distribution during handover.

A further application for the provision of the dedicated RACH preamble is the radio link failure (RLF) case wherein due to the presence of the dedicated RACH preamble a connection re-establishment can be easily triggered - for a respective cell search the target cells uplink PCC with dedicated RACH preamble is known thus simplifying and speeding up the cell search at the target cell.

In accordance with a further embodiment of the invention, the linking information further indicates if said one of the aggregated component carriers of the target cell is already active or is still inactive. Since the aggregated component carriers form at least one primary and optionally a secondary component carrier, by indicating the PCC and SCC for the target cell in the RRC connection reconfiguration message, for handover the PCC and SCC are thus either implicitly activated or deactivated for the target cell which is indicated in the linking information.

This has the advantage, that for example separate MAC signaling is not required as it would be the case for a separate activation of SCCs: generally, the reconfiguration, addition and removal of CCs may be performed by RRC but the activation of SCC is not done automatically, so a separate MAC signaling would be required. By automatically activating respective aggregated component carriers by the source or the target eNodeB and providing information about a respective activation of PCC and SCC to the user equipment, additional signaling can thus be avoided.

In accordance with a further embodiment of the invention, the linking information further indicates if the component carrier configuration of the source cell can be identically used for the target cell. This is the preferred embodiment since in case the same CC configuration and linking as in the source cell can be used in the target cell, the same high throughput and bandwidth of the source cell can be guaranteed in the target cell and thus no additional new RRC configuration and MAC activation of the handover is required.

As already mentioned above, the aggregated component carriers form at least one primary and optionally a secondary component carrier. Thus, the linking information indicates from the array

$$\{PCC, SCC\}$$

one of said carriers for the uplink of the target cell and one of said carriers for the downlink of the target cell.

In another aspect, the invention relates to a user equipment adapted for performing a handover from a source cell to a target cell, wherein the user equipment is adapted for receiving and/or transmitting data simultaneously on two or more aggregated component carriers forming at least one component carrier, the user equipment being further adapted for receiving an RRC connection reconfiguration message from the source cell on the random access channel of the source cell, said message comprising linking information, said linking information indicating one of the aggregated component carriers for the uplink of the target cell and one of the aggregated component carriers for the downlink of the target cell.

In another aspect, the invention relates to a method of performing a handover of a user equipment from a source cell to a target cell, the method being performed by a base station of the source cell, wherein the base station is adapted for receiving and/or transmitting data simultaneously on two or more aggregated component carriers, the method comprising transmitting an RRC connection reconfiguration message on the random access channel of the source cell, said message comprising linking information, said linking information indicating one of the aggregated component carriers for the uplink of the target cell and one of the aggregated component carriers for the downlink of the target cell.

In accordance with an embodiment of the invention, the method further comprises receiving one of the aggregated component carriers for the uplink of the target cell and one of the aggregated component carriers for the downlink of the target cell from a base station of the target cell.

In another aspect, the invention relates to a base station adapted for performing a handover of a user equipment from a source cell to a target cell, wherein the base station is adapted for receiving and/or transmitting data simultaneously on two or more aggregated component carriers forming at least one component carrier, the base station being further adapted for transmitting an RRC connection reconfiguration message on the random access channel of the source cell, said message comprising linking information, said linking information indicating one of the aggregated component carriers for the uplink of the target cell and one of the aggregated component carriers for the downlink of the target cell.

In another aspect, the invention relates to a computer product comprising computer executable instructions to perform any of the method as described above.

**Brief description of the drawings**

In the following preferred embodiments of the invention will be described in greater detail by way of example only making reference to the drawings in which:

Figure 1     shows a block diagram of a wireless communication network,

Figure 2     illustrates the exemplary content of a RRC connection reconfiguration message (HO command).

## Detailed description

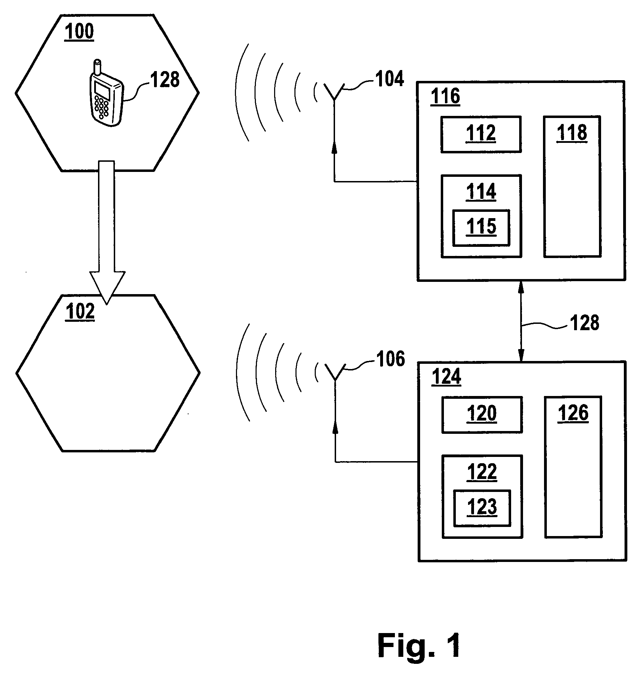

Fig. 1 illustrates a block diagram of a wireless communication network. It has to be noted, that only features are shown here which are relevant for the present invention.

The network illustrated in Fig. 1 is for example a UMTS terrestrial radio access network (UTRAN) based upon a 3GPP radio access network specification. The communication network comprises two eNodeBs 116 and 124 and a user equipment UE 128. As illustrated in Fig. 1, the UE 128 is currently spatially located in a source cell 100 served by the eNodeB 116.

Serving by the eNodeB 116 is performed via the antenna 104 which provides network coverage with respect to the source cell 100.

The eNodeB 116 comprises a processor 112, as well as a memory 114. The memory 114 comprises a module 115 comprising computer executable instructions executable by the processor 112. These instructions may comprise any instructions to perform the method as described above.

Further, the eNodeB 116 comprises an interface 118 for communication via a backhaul 128 with the eNodeB 124.

The eNodeB 124 is configured in a similar manner as the eNodeB 116. Consequently, the eNodeB 124 comprises a processor 120, a memory 122 comprising a module 123. Again, the module 123 comprises computer executable instructions executable by the processor 120. These instructions may comprise any instructions in order to perform the method as described above.

An interface 126 is further provided at the eNodeB 124 for communication with the eNodeB 116 via a backhaul 128.

An antenna 106 of the eNodeB 124 is further provided for providing coverage of the target cell 102.

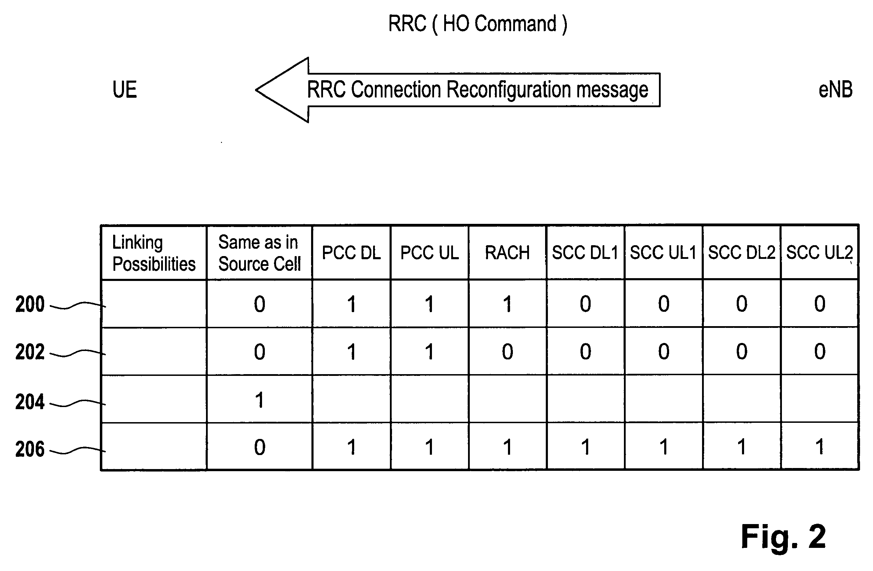

In the following, four different scenarios shall be discussed regarding a handover of the UE 128 from the source cell 100 to the target cell 102. These scenarios will be discussed with respect to the RRC connection reconfiguration message content illustrated with respect to Fig. 2.

For the following scenarios, it does not matter what exact CC configuration and linking is provided in the source cell 100. However, without loss of generality, in the following it is assumed that in the source cell 100 the UE 128 has one uplink PCC, one uplink SCC, as well as one downlink PCC and one downlink SCC.

In the first scenario, an RCC connection reconfiguration message with content indicated in line 200 of fig. 2 is provided from the eNodeB 116 to the UE 128. The RRC connection reconfiguration message is received by the UE 128 and analyzed by the UE. In this embodiment, the message indicates that the CC configuration and linking of the source cell 100 cannot be used in the target cell. This is indicated by an exemplary bit '0' in the column 'same as in source cell'.

Further, information about the PCC downlink and the PCC uplink is provided in detail in the message. For case of simplicity, this is only denoted by a bit '1'. However, in practice further information will be comprised and provided together with that bit. This may comprise for example a center frequency of the PCC downlink and the PCC uplink.

The RRC connection reconfiguration message further comprises a dedicated RACH preamble such that non-contention RACH access is guaranteed for the handover.

Preferably, by convention the bits '1' in the message depicted in Fig. 2 further indicate that for the handover case the PCCs are already implicitly activated - an additional activation of for example SCCs by MAC signaling of the UE is not necessary.

In a second scenario, an RRC connection reconfiguration message with the content denoted in line 202 is provided from the eNodeB 116 to the UE 128. This scenario differentiates over the above discussed scenario only in the detail that no dedicated RACH preamble exists.

In a third scenario, an RRC connection reconfiguration message with the content denoted by reference numeral 204 is provided from the eNodeB to the UE 128. Here, only one bit is set, namely bit '1' for the column 'same as in source cell'. This indicates, that the user equipment may use the same CC configuration and linking in the target cell 102 as already used with respect to the source cell 100. Further, this additionally preferably indicates that the PCC and SCC are again already implicitly activated, thus no extra activation especially with respect to the uplink and downlink SCC is required. Consequently, a separate MAC signaling is avoided for an extra activation of the uplink and downlink SCC.

Finally, in a fourth scenario, an RRC connection reconfiguration message with content 206 is provided from the eNodeB 116 to the UE 128. In this message it is indicated that not the same CC configuration and linking can be used in the target cell 102 as used with respect to the source cell 100. However, this message indicates that the eNodeB 128 may use a specifically given downlink PCC, a specifically given uplink PCC, as well as two specifically given downlink SCCs (DL1 and DL2) and two specifically given uplink SCCs (UL1 and UL2). Again, preferably the bits indicate an already implicit activation of PCCs and SCCs. Further, a dedicated RACH preamble is provided in the message.

The specific information about the uplink and downlink PCCs and SCCs available for the UE 128 in the target cell 102 is provided from the target cells eNodeB 124 to the eNodeB 116 via the backhaul 128.

## Claims

1. A method of performing a handover of a user equipment (128) from a source cell (100) to a target cell (102), wherein the user equipment (128) is adapted for receiving and/or transmitting data simultaneously on two or more aggregated component carriers, the method comprising receiving an RRC connection reconfiguration message from the source cell (100) on the random access channel of the source cell (100), said message comprising linking information, said linking information indicating one of the aggregated component carriers for the uplink of the target cell (102) and one of the aggregated component carriers for the downlink of the target cell (102).

2. The method of claim 1, wherein the RRC connection reconfiguration message further comprises a dedicated RACH preamble.

3. The method of claim 1, wherein the linking information further indicates if said one of the aggregated component carriers of the target cell (102) is already active or inactive.

4. The method of claim 1, wherein the linking information indicates if the component carrier configuration of the source cell (100) can be identically used for the target cell (102).

5. The method of claim 1, wherein the aggregated component carriers form at least one primary and a secondary component carrier.

6. A user equipment (128) adapted for performing a handover from a source cell (100) to a target cell (102), wherein the user equipment (128) is adapted for receiving and/or transmitting data simultaneously on two or more aggregated component carriers forming at least one component carrier, the user equipment (128) being further adapted for receiving an RRC connection reconfiguration message from the source cell (100) on the random access channel of the source cell (100), said message comprising linking information, said linking information indicating one of the aggregated component carriers for the uplink of the target cell (102) and one of the aggregated component carriers for the downlink of the target cell (102).

7. A method of performing a handover of a user equipment (128) from a source cell (100) to a target cell (102), the method being performed by a base station of the source cell (100), wherein the base station (116) is adapted for receiving and/or transmitting data simultaneously on two or more aggregated component carriers, the method comprising transmitting an RRC connection reconfiguration message on the random access channel of the source cell (100), said message comprising linking information, said linking information indicating one of the aggregated component carriers for the uplink of the target cell (102) and one of the aggregated component carriers for the downlink of the target cell (102).

8. The method of claim 7, further comprising receiving one of the aggregated component carriers for the uplink of the target cell (102) and one of the aggregated component carriers for the downlink of the target cell (102) from a base station of the target cell (102).

9. A base station (116) adapted for performing a handover of a user equipment (128) from a source cell (100) to a target cell (102), wherein the base station (116) is adapted for receiving and/or transmitting data simultaneously on two or more aggregated component carriers forming at least one component carrier, the base station being further adapted for transmitting an RRC connection reconfiguration message on the random access channel of the source cell (100), said message comprising linking information, said linking information indicating one of the aggregated component carriers for the uplink of the target cell (102) and one of the aggregated component carriers for the downlink of the target cell (102).

10. A computer product comprising computer executable instructions to perform any of the method steps as claimed in claims 1 to 5 or to perform any of the method steps as claimed in claims 7 to 8.

**Patentansprüche**

1. Verfahren für das Ausführen einer Übergabe eines Benutzergeräts (128) von einer Quellzelle (100) an eine Zielzelle (102), wobei das Benutzergerät (128) ausgelegt ist für das simultane Empfangen und/oder Übermitteln von Daten auf zwei oder mehr aggregierten Komponententrägern, wobei das Verfahren den Empfang einer RRC-Verbindungsrekonfigurationsnachricht von der Quellzelle (100) auf dem zufallsgenerierten Zugangskanal der Quellzelle (100) umfasst, wobei besagte Nachricht Verbindungsinformationen umfasst, wobei besagte Verbindungsinformationen einen der aggregierten Komponententräger für den Uplink der Zielzelle (102) und einen der aggregierten Komponententräger für den Downlink der Zielzelle (102) angeben.

2. Das Verfahren nach Anspruch 1, wobei die RRC-Verbindungsrekonfigurationsnachricht weiterhin eine dedizierte RACH-Präambel umfasst.

3. Das Verfahren nach Anspruch 1, wobei die Verbindungsinformationen weiterhin angeben, ob besagter der aggregierten Komponententräger der Zielzelle (102) bereits aktiv oder inaktiv ist.

**4.** Das Verfahren nach Anspruch 1, wobei die Verbindungsinformationen angeben, ob die Komponententrägerkonfiguration der Quellzelle (100) in identischer Form für die Zielzelle (102) verwendet werden kann.

**5.** Das Verfahren nach Anspruch 1, wobei die aggregierten Komponententräger mindestens einen primären und einen sekundären Komponententräger bilden.

**6.** Benutzergerät (128), ausgelegt für das Ausführen einer Übergabe von einer Quellzelle (100) an eine Zielzelle (102), wobei das Benutzergerät (128) ausgelegt ist für das simultane Empfangen und/oder Übermitteln von Daten auf zwei oder mehr aggregierten Komponententrägern, die mindestens einen Komponententräger bilden, wobei das Benutzergerät (128) weiterhin ausgelegt ist für den Empfang einer RRC-Verbindungsrekonfigurationsnachricht von der Quellzelle (100) auf dem zufallsgenerierten Zugangskanal der Quellzelle (100), wobei besagte Nachricht Verbindungsinformationen umfasst, wobei besagte Verbindungsinformationen einen der aggregierten Komponententräger für den Uplink der Zielzelle (102) und einen der aggregierten Komponententräger für den Downlink der Zielzelle (102) angeben.

**7.** Verfahren für das Ausführen einer Übergabe eines Benutzergeräts (128) von einer Quellzelle (100) an eine Zielzelle (102), wobei das Verfahren von einer Basisstation der Quellzelle (100) ausgeführt wird, wobei die Basisstation (116) ausgelegt ist für das simultane Empfangen und/oder Übermitteln von Daten auf zwei oder mehr aggregierten Komponententrägern, wobei das Verfahren die Übermittlung einer RRC-Verbindungsrekonfigurationsnachricht auf dem zufallsgenerierten Zugangskanal der Quellzelle (100) umfasst, wobei besagte Nachricht Verbindungsinformationen umfasst, wobei besagte Verbindungsinformationen einen der aggregierten Komponententräger für den Uplink der Zielzelle (102) und einen der aggregierten Komponententräger für den Downlink der Zielzelle (102) angeben.

**8.** Das Verfahren nach Anspruch 7, weiterhin den Empfang eines der aggregierten Komponententräger für den Uplink der Zielzelle (102) und eines der aggregierten Komponententräger für den Downlink der Zielzelle (102) von einer Basisstation der Zielzelle (102) umfassend.

**9.** Basisstation (116), ausgelegt für das Ausführen einer Übergabe eines Benutzergeräts (128) von einer Quellzelle (100) an eine Zielzelle (102), wobei die Basisstation (116) ausgelegt ist für das simultane Empfangen und/oder Übermitteln von Daten auf zwei oder mehr aggregierten Komponententrägern, die mindestens einen Komponententräger bilden, wobei die Basisstation weiterhin ausgelegt ist für das Übermitteln einer RRC-Verbindungsrekonfigurationsnachricht auf dem zufallsgenerierten Zugangskanal der Quellzelle (100), wobei besagte Nachricht Verbindungsinformationen umfasst, wobei besagte Verbindungsinformationen einen der aggregierten Komponententräger für den Uplink der Zielzelle (102) und einen der aggregierten Komponententräger für den Downlink der Zielzelle (102) angeben.

**10.** Computerprogramm-Produkt, von einem Computer ausführbare Anweisungen zum Ausführen eines jeglichen der Verfahrensschritte nach den Ansprüchen 1 bis 5 oder zum Ausführen eines jeden der Verfahrensschritte nach den Ansprüchen 7 und 8 umfassend.

**Revendications**

**1.** Procédé de réalisation d'un transfert d'équipement utilisateur (128) d'une cellule source (100) vers une cellule cible (102), dans lequel l'équipement utilisateur (128) est adapté pour recevoir et/ou transmettre des données simultanément sur deux porteuses composantes agrégées ou plus, le procédé comprenant la réception d'un message de reconfiguration de connexion RRC en provenance de la cellule source (100) sur le canal d'accès aléatoire de la cellule source (100), ledit message comprenant des informations de liaison, lesdites informations de liaison désignant l'une des porteuses composantes agrégées pour la liaison montante de la cellule cible (102) et l'une des porteuses composantes agrégées pour la liaison descendante de la cellule cible (102).

**2.** Procédé selon la revendication 1, dans lequel le message de reconfiguration de la connexion RRC comprend en outre un préambule RACH dédié.

**3.** Procédé selon la revendication 1, dans lequel les informations de liaison indiquent en outre si l'une desdites porteuses composantes agrégées de la cellule cible (102) est déjà active ou inactive.

**4.** Procédé selon la revendication 1, dans lequel les informations de liaison indiquent si la configuration de porteuse composante de la cellule source (100) peut être utilisée à l'identique pour la cellule cible (102).

**5.** Procédé selon la revendication 1, dans lequel les porteuses composantes agrégées forment au moins une porteuse composante principale et une porteuse composante secondaire.

**6.** Équipement utilisateur (128) adapté pour réaliser un transfert d'une cellule source (100) vers une cellule cible (102), dans lequel l'équipement utilisateur (128) est adapté pour recevoir et/ou transmettre des données simultanément sur deux porteuses composantes agrégées ou plus formant au moins une porteuse composante, l'équipement utilisateur (128) étant en outre adapté pour recevoir un message de reconfiguration de connexion RRC en provenance de la cellule source (100) sur le canal d'accès aléatoire de la cellule source (100), ledit message comprenant des informations de liaison, lesdites informations de liaison désignant l'une des porteuses composantes agrégées pour la liaison montante de la cellule cible (102) et l'une des porteuses composantes agrégées pour la liaison descendante de la cellule cible (102).

**7.** Procédé de réalisation d'un transfert d'équipement utilisateur (128) d'une cellule source (100) vers une cellule cible (102), le procédé étant exécuté par une station de base de la cellule source (100), dans lequel la station de base (116) est adaptée pour recevoir et/ou transmettre des données simultanément sur deux porteuses composantes agrégées ou plus, le procédé comprenant la transmission d'un message de reconfiguration de connexion RRC sur le canal d'accès aléatoire de la cellule source (100), ledit message comprenant des informations de liaison, lesdites informations de liaison désignant l'une des porteuses composantes agrégées pour la liaison montante de la cellule cible (102) et l'une des porteuses composantes agrégées pour la liaison descendante de la cellule cible (102).

**8.** Procédé selon la revendication 7, comprenant en outre la réception de l'une des porteuses composantes agrégées pour la liaison montante de la cellule cible (102) et de l'une des porteuses composantes agrégées pour la liaison descendante de la cellule cible (102) en provenance d'une station de base de la cellule cible (102).

**9.** Station de base (116) adaptée pour réaliser un transfert d'équipement utilisateur (128) d'une cellule source (100) vers une cellule cible (102), dans laquelle la station de base (116) est adaptée pour recevoir et/ou transmettre des données simultanément sur deux porteuses composantes agrégées ou plus formant au moins une porteuse composante, la station de base étant en outre adaptée pour transmettre un message de reconfiguration de connexion RRC sur le canal d'accès aléatoire de la cellule source (100), ledit message comprenant des informations de liaison, lesdites informations de liaison désignant l'une des porteuses composantes agrégées pour la liaison montante de la cellule cible (102) et l'une des porteuses composantes agrégées pour la liaison descendante de la cellule cible (102).

**10.** Produit informatique comprenant des instructions exécutables sur ordinateur destiné à réaliser l'une quelconque des étapes de procédé selon les revendications 1 à 5 ou à réaliser l'une quelconque des étapes de procédé selon les revendications 7 à 8.

**Fig. 1**

EP 2 373 090 B1

RRC ( HO Command )

UE ← RRC Connection Reconfiguration message eNB

| Linking Possibilities | Same as in Source Cell | PCC DL | PCC UL | RACH | SCC DL1 | SCC UL1 | SCC DL2 | SCC UL2 |
|---|---|---|---|---|---|---|---|---|
| 200 | 0 | 1 | 1 | 1 | 0 | 0 | 0 | 0 |
| 202 | 0 | 1 | 1 | 0 | 0 | 0 | 0 | 0 |
| 204 | 1 | | | | | | | |
| 206 | 0 | 1 | 1 | 1 | 1 | 1 | 1 | 1 |

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Mobility and Carrier Aggregation Signaling. *3GPP TSG-RAN WG2 #69, San Francisco, US, 22-26 February, 2010, NEC*

- Handover for Carrier Aggregation. *3GPP TSG RAN WG2 Meeting #66bis, Los Angeles, USA, 29 June - 03 July, 2009, CATT*